Europäisches Patentamt

European Patent Office

Office européen des brevets

(19)

(11) Publication number: **0 146 163**
**B1**

(12) **EUROPEAN PATENT SPECIFICATION**

(45) Date of publication of patent specification: **23.12.87**

(51) Int. Cl.⁴: **C 08 L 95/00, C 08 L 53/00**

(21) Application number: **84201678.4**

(22) Date of filing: **20.11.84**

(54) A bituminous composition comprising polymers.

(30) Priority: **16.12.83 US 562253**

(43) Date of publication of application:
**26.06.85 Bulletin 85/26**

(45) Publication of the grant of the patent:
**23.12.87 Bulletin 87/52**

(84) Designated Contracting States:
**AT BE CH DE FR GB IT LI NL SE**

(56) References cited:
**EP-A-0 009 209**
**FR-A-2 090 938**
**FR-A-2 283 179**
**US-A-4 277 575**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Mikols, Wayne John
20302 Laurellock
Katy Texas 77450 (US)**

(74) Representative: **Aalbers, Onno et al
P.O. Box 302
NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 146 163**

## Description

The present invention relates to a bituminous composition comprising polymers, which composition is useful in roofing, paving and adhesives applications. The present invention also relates to articles, preferably having self-adhesive properties, comprising such compositions.

Since the late 1960's, elastomers, such as styrene-butadiene block copolymers have been used to dramatically improve the thermal and mechanical properties of bitumens. Practical application of the elastomer addition approach requires that the blended products retain improved properties and homogeneity during transportation, storage, and processing. Long term performance of elastomer-modified bitumens also depends on the ability of the blend to maintain thermal and chemical stability.

In the past, it was discovered that selection of a particular bitumen played an important role in the long term thermal, mechanical and chemical stability of the blended product. This lead to much research on the compatibility of elastomeric thermoplastic polymers with various types of bitumens. Results of this research stressed a need for the use of special bitumens to develop premium quality products with improved and/or stabilized properties. It was determined that in part, the reduction in material properties observed for incompatible bitumens resulted from the advancement of microphase separation. Previous attempts have been made to stabilize the thermal, mechanical, and chemical properties of incompatible elastomeric thermoplastic polymer-bitumen blends. Those attempts have been based on the chemical modification of the bitumen. The microphase separation occurs between the asphaltene and maltene rich phases of elastomer modified blends.

The present invention provides a method for stabilising the microstructure of elastomeric thermoplastic polymer-bitumen blends by incorporating a small amount of a class of diblock copolymers. The method of the present invention greatly improves the long-term properties of the blends and broadens the range of bitumens available to produce quality products. Small amounts of the diblock copolymer serve to stabilise the asphaltene-maltene phase microstructure of these blends. Stabilization is believed to occur as a result of the difference in solubility parameters between the diblock copolymer and the thermoplastic polymers. Hence, stabilization is far less dependent on bitumen chemistry than previous compatibilization schemes. This invention is important in the modified bitumen roofing industry where long service life is desirable. Similar benefits could be achieved in the road paving industry on products such as joint and crack seals, and waterproofing emulsions, and in the auto industry with undercoatings and sound deadening coatings.

The present invention therefore relates to bituminous compositions comprising:
(a) 100—30 %w of a mixture of

(1) 40—99.8 %w of a bituminous component having a penetration of less than 800 (0.1 mm) at 25°C,
(2) 0.1—50 %w of a thermoplastic block copolymer having at least one thermoplastic monoalkenyl arene polymer block A and at least one elastomeric conjugated diene block B, whereby this block copolymer has at least three blocks, and
(3) 0.1—10.0 %w of a polystyrene-poly(ethylene-propylene) diblock copolymer,

(b) 0—70 %w of a filler,
(c) 0—70 %w of a solvent, in which (a), (b) and (c) add up to 100 %w.

Component (1) may be a naturally occurring bitumen or a bitumen derived from a mineral oil. Also petroleum pitches obtained by a cracking process and coal tar can be used as the bituminous component as well as blends of various bituminous materials.

Examples of suitable components include distillation bitumens, precipitation bitumens, e.g., propane bitumens, blown bitumens and mixtures thereof. Other suitable components include mixtures of one or more of these bitumens with extenders, such as petroleum extracts, e.g., aromatic extracts, distillates or residues (fluxed bitumens). Suitable bituminous or fluxed bituminous components are those having a penetration of <800 (0.1 mm) at 25°C. Preference is given to the use of bitumens having a penetration of from 5 to 300, in particular from 10 to 200 (0.1 mm) at 25°C. The amount of component (1) is preferably 75—99.5 %w calculated on mixtures of components (1), (2) and (3).

Suitable components (2) are styrene-butadiene block copolymers and styrene-isoprene block copolymers. Components (2) may be (partly) hydrogenated.

In addition small amounts, e.g. up to 20 %w, of other monomers may be present, such as ethene, propene, vinyl acetate, ethyl acrylate, butyl acrylate and mixtures thereof. These monomers may be present in one or more of blocks A or B or as additional blocks.

Some commercial components (2) may be in admixture with various extender oils and the resulting compositions are particularly suitable as self-adhesives. Any extender oil present is regarded as a part of the bituminous component insofar as the %w of the components of the present invention is concerned. The preferred amount of component (2) is from 1—15 %w.

A preferred class of components (2) are block copolymers having the general configuration:
A—B-(-B—A)n, wherein A and B have the above meaning and n is an integer, suitable from 1 to 5, or a (partly) hydrogenated derivative thereof.

The polymer block A preferably has a number average molecular weight, in the range of from 2,000 to

2

100,000, particularly from 7,500 to 50,000. The polymer block B preferably has an average molecular weight in the range of from 25,000 to 1,000,000, particularly from 35,000 to 150,000. Whenever according to the branched configuration two or more blocks B are immediately adjacent to each other they are treated as a single block for purposes of molecular weight. The amount of polymer blocks A in the block copolymers preferably ranges from 10 to 70 %w, particularly from 20 to 50 %w.

Suitable examples of such components (2) are triblock copolymers, such as polystyrene-polyisoprene-polystyrene, polystyrene-polybutadiene-polystyrene and their hydrogenated counterparts, in particular the olefinically hydrogenated counterparts.

Copolymers (2) may be formed by a number of different types of processes known in the art.

Linear and branched block copolymers can be used as well including the so-called star-shaped polymers which are obtained by using polyalkenyl coupling agents, e.g., divinyl pyridine and polyvinylbenzenes such as divinyl-benzene in the polymerization process.

These block copolymers may be hydrogenated if desired by any suitable technique. The hydrogenation may be complete or partial. It is also possible to selectively hydrogenate just the centre block so as to convert, e.g., a polyisoprene block to an ethylene propylene rubber block. Such a block may also directly be prepared from ethylene and propylene, but this is not preferred.

Mixtures of one or more thermoplastic polymers may also be used. Suitable mixtures are referred to in the Dutch patent applications Nos. 7411373 and 6706408.

Component (3) also comprises polystyrene-poly(ethylene-propylene) diblock copolymers, prepared by partial hydrogenation of a polystyrene-polyisoprene diblock copolymer. In that case component (2), which of course must be different from component (3), is preferably a triblock or a branched polymer.

The amount of component (3) is preferably 0.5—5 %w, calculated on mixtures of components (1), (2) and (3).

The bituminous compositions according to the present invention may also contain one or more fillers. The fillers can be of inorganic and/or organic nature and are known to those skilled in the art. Examples of suitable fillers comprise chalk, limestone, unbaked powdered gypsum, talcum, fly ash, coal combustion waste, pigments such as titanium dioxide, iron oxide, chromium oxide, diatomaceous earth and other clays, quartz flour and the various carbon blacks.

Preferred amounts of filler are 15—60 %w, more preferably 25—50 %w on the total composition.

If desired, the bituminous compositions according to the present invention may also contain a solvent which may facilitate the applicability of the compositions. The use of a solvent may lead to thixotropic pastes which have a trowelling or brushing consistency. Examples of suitable solvents having a boiling point between 30 and 250°C comprise hydrocarbons, especially aromatic hydrocarbons such as benzene, toluene and the xylenes. Good results have been obtained using xylenes as solvents. Halogenated hydrocarbons and especially chlorinated hydrocarbons can also be used as solvents. Examples of halogenated hydrocarbons comprise dichloromethane, trichloromethane, 1,1,1-trichloroethane and 1,1,2,2-tetrachloroethane. Preferably the solvents applied should at one hand improve the handleability of the compositions and at the other hand be capable of easy removal.

The amount of solvent to be used is not critical and can vary between wide limits which are basically determined by the type of (fluxed) bitumen used and the intended application of the bituminous compositions. Amounts of solvents up to 50 %w, calculated on the total mixture of the components (1), (2) and (3) can be used suitably, preference being given to the use of solvents in an amount of up to 25 %w. The solvent may be incorporated into the bituminous composition as such but it may also be mixed with one or more of the components (1), (2) and (3) prior to the preparation of the composition.

The bituminous compositions according to the present invention may be prepared by various methods. A convenient method comprises blending of the (fluxed) bitumen and the polymeric components at an elevated temperature.

Solvent containing compositions can be suitably prepared by blending a pre-blend containing a bituminous component and a filler, if used, with a polymer/solvent blend. The pre-blend can be obtained by mixing the bituminous component and the filler at a suitable temperature. Optionally, a solvent can also be added to the ready composition.

Examples

The "compatibility test" described below is a simple method for accessing phase separation in bitumen-polymer blends. Two different bitumens which normally demonstrate significant degrees of "incompatibility" or phase separation were examined. The results are tabulated in the Table. Viscosity values were obtained on a Brookfield viscometer equipped with a thermocell. Ring and Ball (R & B) softening point values were obtained in accordance with procedure ASTM-D2398. 150 g penetration values are reported in accordance with ASTM-D-5.

15 %w copolymer was mixed into the bitumen using a high shear mixer (190°C) to get a good blend. The mixture was transferred to a pint paint can. The top of the can was blanketed with $N_2$ then sealed. The can was aged for 5 days at 160°C, then cooled. The can was removed by cutting and the properties of the material at the top and bottom were determined.

The bituminous compositions were prepared by using propane bitumen with a penetration of 169 dmm for examples 1—5 (bitumen 1) and 82 dmm for Examples 6—8 (bitumen 2). Copolymer 1 is a

3

styrene-butadiene-styrene block copolymer having 31 %w styrene and a molecular weight distribution of 16,000—74,000—16,000. Copolymer 2 is a styrene-butadiene-styrene radial block copolymer having the structure (SB)$_{3.5}$, 30 %w styrene and having a weight distribution of 19,000—44,000 for the SB diblock.

Diblock copolymer 1 is a diblock containing an ethylene-propylene block of 63,400 molecular weight and a styrene block of 36,600 molecular weight. Diblock copolymer 2 is a diblock with an ethylene-propylene block of 106,000 and a styrene block of 40,000 molecular weight. These copolymers are obtained by partial hydrogenation of polystyrene-polyisoprene diblock copolymers.

Diblock copolymer 3 is a polystyrene-polyisoprene diblock copolymer and is used for comparison.

TABLE
Summary of bitumen stabilization data

| Component | 1 | 2 | 3 | 4 | 5 | 6 | 7 | 8 | 9 |
|---|---|---|---|---|---|---|---|---|---|
| Bitumen 1 | 85.0 | 85.0 | 85.0 | 85.0 | 85.0 | — | — | — | — |
| Bitumen 2 | — | — | — | — | — | 85.0 | 85.0 | 85.0 | — |
| Thermoplastic copolymer 1 | 15.0 | 14.5 | 10.0 | 13.0 | 10.0 | 15.0 | 13.0 | — | 13.0 |
| Thermoplastic copolymer 2 | — | — | — | — | — | — | — | 13.0 | — |
| Diblock copolymer 1 | — | 0.5 | — | 2.0 | 5.0 | — | 2.0 | 2.0 | — |
| Diblock copolymer 2 | — | — | 5.0 | — | — | — | — | — | — |
| Diblock copolymer 3 | — | — | — | — | — | — | — | — | 2.0 |
| Unaged R & B, (°C) | 107 | 109 | 106 | 112 | 110 | 116 | 113 | 132 | 117 |
| Aged top R & B, (°C) | 108 | 109 | 104 | 107 | 104 | 120 | 123 | 129 | 114 |
| Aged bot. R & B, (°C) | 89 | 101 | 106 | 106 | 99 | 112 | 378 | 126 | 99 |
| Unaged pen, (dmm) | 46 | 40 | 43 | 39 | 43 | 29 | 32 | 31 | 31 |
| Aged top pen, (dmm) | 65 | 51 | 40 | 35 | 43 | 39 | 31 | 32 | 65 |
| Aged bot. pen, (dmm) | 52 | 38 | 45 | 35 | 44 | 31 | 31 | 32 | 28 |
| Unaged 180°C visc., (cps) | 4188 | 5188 | 5500 | 5850 | 5000 | 5375 | 5312 | 6438 | 5380 |
| Aged top 180°C visc., (cps) | 5312 | 6250 | 7662 | 6312 | 6625 | 13000 | 7938 | 8688 | 10000 |
| Aged bot. 180°C, visc., (cps) | 1050 | 3938 | 5750 | 5938 | 6680 | 6625 | 5688 | 6625 | 1550 |
| Separation Index* | 1.02 | 0.45 | 0.35 | 0.06 | −0.01 | 1.19 | 0.42 | 0.32 | 1.57 |

* Separation index=[(Aged top visc.-aged bot. visc.)/unaged visc.]. A completely stable mixture should have a Separation Index=0.00.

**0 146 163**

The Separation Index reported in this Table demonstrates significant improvement in the thermal-chemical phase stability of formulations containing polystyrene-poly(ethylene-propylene) diblock copolymer. Such improvement has a significant impact on the long term aging characteristics of modified bitumens. This can be seen by comparing the separation indices for blends 1 and 6 which contain no diblock copolymer and blend 9 which contains a comparative diblock copolymer with the separation indices for blends 2—5, 7 and 8.

**Claims**

1. A bituminous composition comprising:
(a) 100—30 %w of a mixture of

(1) 40—99.8 %w of a bituminous component having a penetration of less than 800 (0.1 mm) at 25°C,
(2) 0.1—50 %w of a thermoplastic block copolymer having at least one thermoplastic monoalkenyl arene polymer block A and at least one elastomeric conjugated diene block B, whereby this block copolymer has at least three blocks and may be (partly) hydrogenated,
(3) 0.1—10.0 %w of a polystyrene-poly(ethylene-propylene) diblock copolymer,

(b) 0—70 %w of a filler,
(c) 0—70 %w of a solvent, in which (a), (b) and (c) add up to 100 %w.
2. A composition according to claim 1, wherein component (1) has a penetration of from 5 to 300 (0.1 mm) at 25°C.
3. A composition according to any one of claims 1—3, wherein the amount of component (1) is from 75—99.5 %w.
4. A composition according to any one of claims 1—3, wherein the amount of component (2) is from 1—15 %w.
5. A composition according to any one of claims 1—4, wherein the amount of filler is from 15—60 %w.
6. A composition according to any one of claims 1—5, which also contains a solvent having a boiling point between 30 and 250°C.
7. A composition according to claim 6, wherein up to 50 %w of the solvent is present, calculated on the total mixture of the components (1), (2) and (3).
8. A composition according to any one of claims 1—7, wherein component (3) is a partially hydrogenated polystyrene-polyisoprene diblock copolymer.
9. An article comprising the bituminous composition according to any one of claims 1—8.

**Patentansprüche**

1. Bituminöse Mischung mit einem Gehalt an:
(a) 100—30 Gew.-% eines Gemisches aus

(1) 40—99,8 Gew.-% einer bituminösen Komponente mit einer Penetration von weniger als 800 (0,1 mm) bei 25°C,
(2) 0,1—50 Gew.-% eines thermoplastischen Monoalkenyl-aren-Polymerblock A und wenigstens einem elastomeren konjugiertes Dien-Block B, wobei dieses Blockcopolymer wenigstens 3 Blöcke aufweist und (teilweise) hydriert sein kann,
(3) 0,1—10,0 Gew.-% eines Polystyrol-Poly(ethylen-propylen)-Zweiblockcopolymers,

(b) 0—70 Gew.-% eines Füllstoffes,
(c) 0—70 Gew.-% eines Lösungsmittels, worin (a), (b) und (c) 100 Gew.-% ergeben.
2. Mischung nach Anspruch 1, worin die Komponente (1) eine Penetration von 5 bis 300 (0,1 mm) bei 25°C aufweist.
3. Zusammensetzung nach Anspruch 1 oder 2, worin der Anteil der Komponente (1) von 75—99,5 Gew.-% beträgt.
4. Mischung nach einem der Ansprüche 1 bis 3, worin der Anteil Komponente (2) von 1—15 Gew.-% beträgt.
5. Mischung nach einem der Ansprüche 1 bis 4, worin der Anteil an Füllstoff 15—60 Gew.-% beträgt.
6. Mischung nach einem der Ansprüche 1 bis 5, welche auch ein Lösungsmittel mit einem Siedepunkt zwischen 30 und 250°C enthält.
7. Mischung nach Anspruch 6, worin bis zu 50 Gew.-% Lösungsmittel vorliegen, berechnet auf das Gesamtgemisch aus den Komponenten (1), (2) und (3).
8. Mischung nach einem der Ansprüche 1 bis 7, worin die Komponente (3) ein partiell hydriertes Polystyrol-Polyisopren-Zweiblockcopolymer ist.
9. Gegenstand, umfassend die bituminöse Mischung nach einem der Ansprüche 1 bis 8.

**Revendications**

1. Une composition bitumineuse comprenant:
(a) 100—30% en poids d'un mélange de

(1) 40—99,8% en poids d'un constituant bitumineux ayant une pénétration de moins de 800 (0,1 mm) à 25°C,
(2) 0,1—50% en poids d'un copolymère séquencé thermoplastique ayant au moins un bloc A de polymère thermoplastique de monoalcényl arène et au moins un bloc élastomère B de diène conjugué, de manière que ce copolymère séquencé ait au moins trois blocs, et il peut être partiellement hydrogéné,
(3) 0,1—10,0% en poids d'un copolymère à deux blocs polystyrène-poly(éthylène-propylène);

(b) 0—70% en poids d'une charge;
(c) 0—70% en poids d'un solvant, où la somme de (a), (b) et (c) est 100% en poids.

2. Une composition selon la revendication 1, dans laquelle le constituant (1) a une pénétration comprise entre 5 et 300 (0,1 mm) à 25°C.

3. Une composition selon l'une quelconque des revendications 1—3, dans laquelle la quantité de constituant (1) est de 75—99,5% en poids.

4. Une composition selon l'une quelconque des revendications 1—3, dans laquelle la quantité de constituant (2) est de 1—15% en poids.

5. Une composition selon l'une quelconque des revendications 1—4, dans laquelle la quantité de charge est de 15—60% en poids.

6. Une composition selon l'une quelconque des revendications 1—5, qui contient aussi un solvant ayant un point d'ébullition compris entre 30 et 250°C.

7. Une composition selon la revendication 6, dans laquelle une quantité de jusqu'à 50% en poids du solvant est présente, calculée par rapport au mélange total des constituants (1), (2) et (3).

8. Une composition selon l'une quelconque des revendications 1—7, dans laquelle le constituant (3) est un copolymère à deux blocs polystyrène-polyisoprène partiellement hydrogéné.

9. Un article comprenant la composition bitumineuse selon l'une quelconque des revendications 1—8.